# EUROPÄISCHE PATENTANMELDUNG

(11) **EP 4 191 723 A1**
(43) Veröffentlichungstag der Anmeldung: **07.06.2023**
(21) Anmeldenummer: 21211578.6
(22) Anmeldetag: 01.12.2021
(51) Int. Cl.: H01M 10/052, H01M 50/107, H01M 10/0587, H01M 10/623, H01M 10/643, H01M 10/651, H01M 10/6551, H01M 50/213

(54) **ENERGIEVERSORGUNGSVORRICHTUNG UND WERKZEUGMASCHINE MIT EINER SOLCHEN ENERGIEVERSORGUNGSVORRICHTUNG**

(71) Anmelder: Hilti Aktiengesellschaft, 9494 Schaan (LI)
(72) Erfinder: Hartmann, Markus, 87665 Mauerstetten (DE); Stanger, Robert, 87600 Kaufbeuren (DE)
(74) Vertreter: Hilti Aktiengesellschaft Corporate Intellectual Property

(57) **Zusammenfassung**

Die vorliegende Erfindung betrifft eine Energieversorgungsvorrichtung, insbesondere für eine Werkzeugmaschine, wobei die Energieversorgungsvorrichtung mindestens einer Zelle umfasst. Die mindestens eine Zelle weist eine Nominalkapazität von mindestens 1,5 Ampèrestunden auf, sowie eine Oberfläche A und ein Volumen V. Die Oberfläche A der mindestens einen Zelle ist größer ist als das Achtfache der dritten Wurzel des Quadrats des Volumens V der mindestens einen Zelle. Darüber hinaus ist ein Verhältnis von Widerstand und Oberfläche der mindestens einen Zelle kleiner als 0,2 Milliohm/cm² ist. In einem zweiten Aspekt betrifft die Erfindung eine Werkzeugmaschine mit einer vorgeschlagenen Energieversorgungsvorrichtung.

## Beschreibung

Die vorliegende Erfindung betrifft eine Energieversorgungsvorrichtung, insbesondere für eine Werkzeugmaschine, wobei die Energieversorgungsvorrichtung mindestens einer Zelle umfasst. Die mindestens eine Zelle weist eine Nominalkapazität von mindestens 1,5 Ampèrestunden auf, sowie eine Oberfläche A und ein Volumen V. Die Oberfläche A der mindestens einen Zelle ist größer ist als das Achtfache der dritten Wurzel des Quadrats des Volumens V der mindestens einen Zelle. Darüber hinaus ist ein Verhältnis von Widerstand und Oberfläche der mindestens einen Zelle kleiner als 0,2 Milliohm/cm² ist. In einem zweiten Aspekt betrifft die Erfindung eine Werkzeugmaschine mit einer vorgeschlagenen Energieversorgungsvorrichtung.

### Hintergrund der Erfindung:

Die Erfindung ist im technischen Gebiet der Werkzeugmaschinen angesiedelt. In diesem technischen Gebiet kommen zunehmend kabellose Werkzeugmaschinen zum Einsatz, die über Energieversorgungsvorrichtungen, wie Akkumulatoren ("Akkus") oder wiederaufladbare Batterien mit elektrischer Energie oder Strom versorgt werden. Üblicherweise weisen die Energieversorgungsvorrichtungen der Werkzeugmaschinen Batteriepacks mit zylinderfömigen Zellen auf, die preiswert in der Herstellung sind und in standardisierten Größen hergestellt werden können.

Akkus oder wiederaufladbare Batterien von Werkzeugmaschinen sind in der Regel so gestaltet, dass sie eine applikationsspezifische Kapazität in der Einheit Ampèrestunden (Ah) auf möglichst wirtschaftliche Weise zur Verfügung stellen. Übliche Anwendungen im Bereich der Werkzeugmaschinen beschränken sich auf kurze Arbeits- bzw. Betriebszeiträume und kleine bis mittlere Leistungen.

Es ist daher ein Anliegen der vorliegenden Erfindung, eine Energieversorgungsvorrichtung, insbesondere für eine Werkzeugmaschine, bereitzustellen, die auch für längere Arbeits- bzw. Betriebszeiträume und höhere Leistungsbereiche eingesetzt werden kann. Ein besonderes Anliegen ist dabei, eine Energieversorgungsvorrichtung bereitzustellen, die thermisch robust gegenüber hohen Erwärmungen ist, wobei solche Erwärmungen sowohl für die einzelnen Zellen der Energieversorgungsvorrichtung, als auch für die Kunststoffteile der Energieversorgungsvorrichtung schädlich sein können.

Werkzeugmaschinen, die beispielsweise für schwere Arbeiten auf einer Baustelle eingesetzt werden sollen, haben einen hohen Leistungsbedarf, der mit einem hohen Entladestrom der Energieversorgungsvorrichtung einhergehen kann. Bei solchen hohen Entladeströmen kann es vorkommen, dass sich konventionelle, beispielsweise zylindrische Zellen der Energieversorgungsvorrichtung stark erwärmen. Eine solche Erwärmung ist aber unerwünscht, weil zum einen Aufwand betrieben werden muss, um die Wärme abzuführen. Zum anderen kann es bei unzureichender Wärmeabfuhr zu Beschädigungen an der Energieversorgungsvorrichtung kommen. Insofern kann eine potentielle Gefährdung für einen Nutzer und ein Risiko für den Betrieb der Werkzeugmaschine die Folge sein.

Die Aufgabe, die der vorliegenden Erfindung zugrunde liegt, besteht darin, die vorstehend beschriebenen Mängel und Nachteile des Standes der Technik zu überwinden und eine Energieversorgungsvorrichtung bereitzustellen, bei der die Erwärmung innerhalb der Energieversorgungsvorrichtung reduziert werden kann. Darüber hinaus soll eine Werkzeugmaschine mit einer entsprechenden Energieversorgungsvorrichtung angegeben werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Energieversorgungsvorrichtung, insbesondere für eine Werkzeugmaschine, vorgesehen, wobei die Energieversorgungsvorrichtung mindestens eine Zelle umfasst. Die mindestens eine Zelle weist eine Nominalkapazität von mindestens 1,5 Ampèrestunden auf, sowie eine Oberfläche A und ein Volumen V. Die Oberfläche A der mindestens einen Zelle ist größer als das Achtfache der dritten Wurzel des Quadrats des Volumens V der mindestens einen Zelle. Darüber hinaus ist ein Verhältnis von Widerstand und Oberfläche der mindestens einen Zelle kleiner als 0,2 Milliohm/cm² ist. Die Formulierung, dass die Oberfläche A der mindestens einen Zelle ist größer ist als das Achtfache der dritten Wurzel des Quadrats des Volumens V kann vorzugsweise auch durch die Formel ***A***>8****V***^(**2**/**3**) zum Ausdruck gebracht werden. In einer anderen Schreibweise kann dieser Zusammenhang dadurch beschrieben werden, dass das Verhältnis A/V von Oberfläche zu Volumen größer ist als das Zehnfache des Kehrwerts der dritten Wurzel des Volumens.

Die Erfinder haben erkannt, dass bei konventionellen Energieversorgungsvorrichtungen, wie sie aus dem Stand der Technik bekannt sind, hohe Erwärmungen insbesondere auf hohe Innenwiderstände der einzelnen Zellen der Energieversorgungsvorrichtung zurückzuführen sind. Zur Reduzierung dieses Innenwiderstand schlägt die Erfindung vor, solche Zellen innerhalb einer Energieversorgungsvorrichtung zu verwenden, bei denen die Oberfläche A von mindestens einer Zelle innerhalb der Energieversorgungsvorrichtung größer ist als das Achtfache der dritten Wurzel des Quadrats des Volumens V der mindestens einen Zelle. Durch Tests konnte gezeigt werden, dass Energieversorgungsvorrichtungen, bei denen dieser Zusammenhang zwischen Oberfläche und Volumen der mindestens einen Zelle der Energieversorgungsvorrichtung erfüllt ist, deutlich besser gekühlt werden können als die Zellen in konventionellen Energieversorgungsvorrichtungen. Die Reduzierung des Innenwiderstands führt vorteilhafterweise zu erheblich verbesserten thermischen Eigenschaften der Energieversorgungsvorrichtung. Insbesondere kann mit der Erfindung eine Lösung dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Zellgeometrien, die die erfindungsgemäße Relation von ***A***>8****V***^(**2**/**3**) erfüllen weisen vorteilhafterweise ein besonders günstiges Verhältnis zwischen der für die Kühlwirkung maßgeblichen Außenfläche der Zelle zum Zellvolumen auf. Wobei die Erfinder erkannt haben, dass das Verhaltnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Achtfache der dritten Wurzel des Quadrats des Volumens V der mindestens einen Zelle. Dadurch kann insbesondere die Wärmeabgabe an die Umgebung verbessert werden.

Es ist im Kontext der Erfindung vorgesehen, dass die mindestens Zelle der Energieversorgungsvorrichtung eine Oberfläche A und ein Volumen V aufweist, wobei ein Verhältnis A/V von Oberfläche zu Volumen größer ist als das Achtfache des Kehrwerts der dritten Wurzel des Volumens. Die Formulierung, dass die Oberfläche A der mindestens einen Zelle ist größer ist als das Achtfache der dritten Wurzel des Quadrats des Volumens V kann vorzugsweise auch durch die Formel ***A***>8****V***^(**2**/**3**) zum Ausdruck gebracht werden. Es kann im Sinne der Erfindung bevorzugt sein, dass das Verhältnis A/V von Oberfläche zu Volumen größer ist als das Zehnfache des Kehrwerts der dritten Wurzel des Volumens.

Es hat sich gezeigt, dass Zellen, die die genannte Relation erfüllen, Wärme deutlich besser an ein umgebendes Medium abgeben können als die Zellen konventioneller Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Mit anderen Worten kann die mindestens eine Zelle mindestens ein Element zur Vergrößerung der Oberfläche der Zelle aufweisen. Es ist im Sinne der Erfindung ganz besonders bevorzugt, dass die mindestens eine Zelle eine Vielzahl von Oberfläche-vergrößernder Elemente aufweist. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

In einer bevorzugten Ausgestaltung der Erfindung kann die Oberfläche A der mindestens einen Zelle größer sein als das Zehnfache der dritten Wurzel des Quadrats des Volumens V der mindestens einen Zelle.

Die vorgeschlagene Energieversorgungsvorrichtung weist eine Nominalkapazität von mindestens 1,5 Ampèrestunden (Ah) auf. Tests haben gezeigt, dass Energieversorgungsvorrichtungen mit einer Nominalkapazität von mehr 1,5 Ah besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Insbesondere können durch die vorgeschlagenen Maßnahmen Energieversorgungsvorrichtungen mit besonders geringen Verhältnissen von Widerstand zu Oberfläche A einer Einzelzelle der Energieversorgungsvorrichtung und Widerstand zu Volumen V einer Einzelzelle der Energieversorgungsvorrichtung bereitgestellt werden. Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Der Begriff «Widerstand» bezeichnet im Sinne der Erfindung bevorzugt den Innenwiderstand DCR_I, der vorzugsweise nach der Norm IEC61960 gemessen werden kann.

Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers.

Es ist im Sinne der Erfindung bevorzugt, dass die mindestens eine Zelle einen Innenwiderstand DCR_I von kleiner als 10 Milliohm (mOhm) aufweist. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaig Beiträge von Komponenten oder Zubehörteile der Zelle zum Innenwiderstand nicht berücksichtigt werden. Ein geringer Innenwiderstand DCR_I zum ist von Vorteil, da dadurch unerwünschte Wärme, die abgeführt werden muss, in geringerem Maße entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_1 auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist die vorgeschlagene Energieversorgungsvorrichtung besonders gut geeignet, um besonders leistungsstarke Werkzeugmaschinen mit elektrischer Energie zu versorgen. Die vorgeschlagene Energieversorgungsvorrichtung kann somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden. Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Vorteilhafterweise kann die Kombination des geringen Erwärmungskoeffizienten mit der hohen Konstant-Strom-Abgabe durch eine optimierte Zellgeometrie erreicht werden, in der beispielsweise das Verhältnis der Anzahl der zellinternen Stromableiter in Relation zur Kapazität möglichst hoch ist. Dies führt vorteilhafterweise dazu, dass ein Innenwiderstand der mindestens einen Zellen reduziert werden kann.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

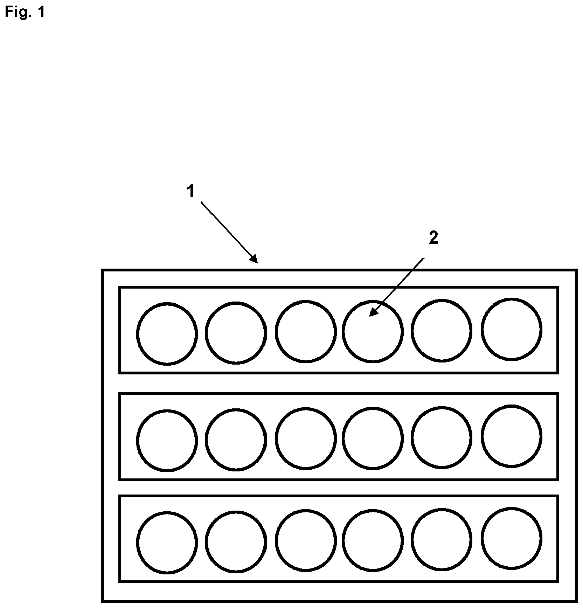

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen à fünf Zellen kann beispielsweise 15 Einzelzellen umfassen. Die in Fig. 1 als Ausführungsbeispiel abgebildete Energieversorgungsvorrichtung weist beispielsweise achtzehn Zellen auf, die in drei Strängen angeordnet sind.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Ober-grenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80·t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80· t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

In einem zweiten Aspekt betrifft die Erfindung eine Werkzeugmaschine mit einer vorgeschlagenen Energieversorgungsvorrichtung. Die für die Energieversorgungsvorrichtung eingeführten Begriffe, Definitionen und technischen Vorteile gelten vorzugsweise für die Werkzeugmaschine analog.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: schematische Seitenansicht einer bevorzugten Ausgestaltung der Energieversorgungsvorrichtung
- Fig. 2: schematische Seitenansicht einer Werkzeugmaschine mit einer bevorzugten Ausgestaltung der Energieversorgungsvorrichtung
- Fig. 3: schematische Darstellung einer bevorzugten Ausgestaltung einer Zelle der Energieversorgungsvorrichtung

### Ausführungsbeispiele und Figurenbeschreibung:

Figur 1 zeigt eine schematische Seitenansicht einer bevorzugten Ausgestaltung der Energieversorgungsvorrichtung 1. Die in Fig. 1 dargestellte Energieversorgungsvorrichtung 1 weist achtzehn Zellen 2 auf, wobei die achtzehn Zellen 2 in drei Strängen innerhalb der Energieversorgungsvorrichtung 1 angeordnet vorliegen. Die Zellen 2 werden insbesondere durch die Kreise symbolisiert, während die Stränge durch die länglichen Rechtecke symbolisiert werden, die die Kreise («Zellen 2») umgeben.

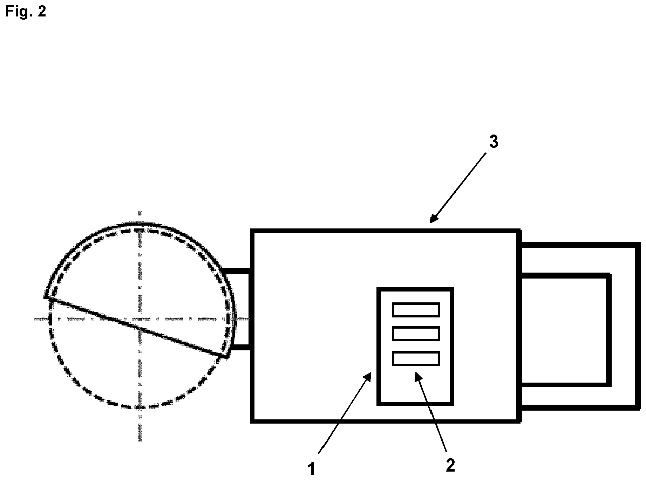

Fig. 2 zeigt eine schematische Ansicht einer Werkzeugmaschine 3 mit einer vorgeschlagenen Energieversorgungsvorrichtung 1. Bei der Werkzeugmaschine 3 kann es sich beispielsweise um einen Trennschleifer handeln, der als Werkzeug eine Trennscheibe aufweist. Die Werkzeugmaschine 3 kann einen Griff aufweisen, der beispielsweise als hinterer Handgriff ausgebildet ist.
Darüber hinaus kann die Werkzeugmaschine 3 in an sich bekannter weise Bedienelemente, wie Schalter oder Knöpfe, aufweisen. Außerdem kann die Werkzeugmaschine 3 einen Motor (nicht dargestellt) aufweisen, der einen Verbraucher darstellen und von der Energieversorgungsvorrichtung 1 mit elektrischer Energie versorgt werden kann.

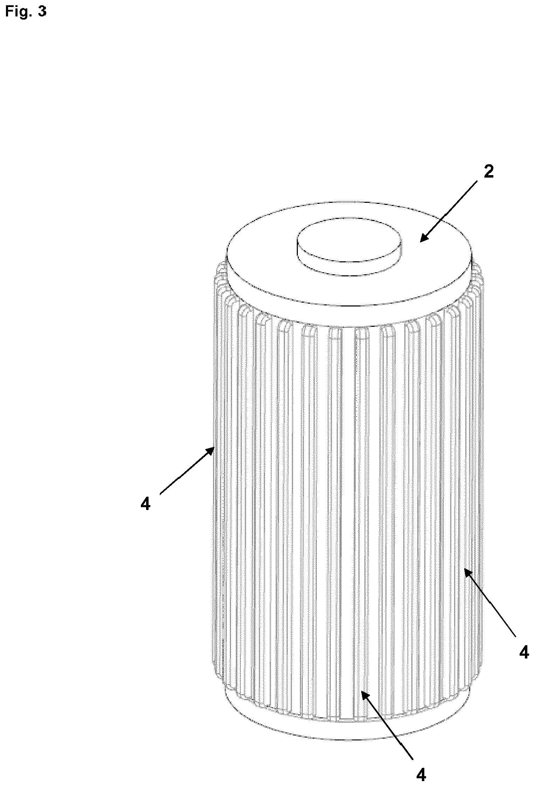

Figur 3 zeigt eine schematische Darstellung einer bevorzugten Ausgestaltung einer Zelle 2 der Energieversorgungsvorrichtung 1. Die Zelle 2 weist eine Oberseite und eine Unterseite auf, wobei sich zwischen der Oberseite und der Unterseite der Zelle 2 ein Zylinder mit einer Mantelfläche erstreckt. Die Oberfläche A der Zelle 2 kann beispielsweise durch Bildung der Summe der Flächen der Oberseite, der Unterseite und der Mantelfläche gebildet werden. Das Volumen V der Zelle 2 ergibt sich durch Multiplikation der Grundfläche, beispielsweise der Unterseite der Zelle 2, mit der Höhe h des Zylinders, der die äußere Gestalt der Zelle 2 prägt.

Auf der Oberfläche A der Zelle 2 können Elemente 4 angeordnet vorliegen, wobei die Elemente 4 die Oberfläche A der Zelle 2 erhöhen. Durch die Vorsehung solcher Oberfläche-vergrößernder Elemente 4 kann beispielsweise eine zylindrische Zelle einer konventionellen Energieversorgungsvorrichtung 1, wie sie aus der Stand der Technik bekannt ist, abgewandelt werden, so dass die modifizierte Zelle 2 die erfindungsgemäße Relation ***A***>8****V***^(**2**/**3**) erfüllt. Selbstverständlich kann die Erfüllung der erfindungsgemäße Relation ***A***>8****V***^(**2**/**3**) auch auf vielen anderen Wegen erreicht werden. Die Oberfläche-vergrößernden Elemente 4 können beispielsweise Rippen, Zähne, Lamellen, Muster oder andere Strukturen sein, ohne darauf beschränkt zu sein. Die Oberfläche-vergrößernden Elemente 4 vergrößern vorteilhafterweise die Oberfläche A der mindestens einen Zelle 2 der Energieversorgungsvorrichtung 1, so dass unerwünschte Wärme besser aus einem Innenraum der Energieversorgungsvorrichtung 1 abgeführt werden kann.

### Bezugszeichenliste

- 1: Energieversorgungsvorrichtung
- 2: Zelle
- 3: Werkzeugmaschine
- 4: Oberfläche-vergrößerndes Element

## Patentansprüche

1. Energieversorgungsvorrichtung (1), insbesondere für eine Werkzeugmaschine (3), wobei die Energieversorgungsvorrichtung (1) mindestens einer Zelle (2) umfasst, **dadurch gekennzeichnet, dass**
die mindestens eine Zelle (2) eine Nominalkapazität von mindestens 1,5 Ampèrestunden aufweist, sowie eine Oberfläche A und ein Volumen V, wobei die Oberfläche A der mindestens einen Zelle (2) größer ist als das Achtfache der dritten Wurzel des Quadrats des Volumens V der mindestens einen Zelle (2) und wobei ein Verhältnis von Widerstand und Oberfläche der mindestens einen Zelle (2) kleiner als 0,2 Milliohm/cm² ist.

2. Energieversorgungsvorrichtung (1) nach Anspruch 1
**dadurch gekennzeichnet, dass**
das Verhältnis von Widerstand und Oberfläche der mindestens einen Zelle (2) kleiner als 0,1 Milliohm/cm² ist und bevorzugt kleiner als 0,05 Milliohm/cm².

3. Energieversorgungsvorrichtung (1) nach Anspruch 1 oder 2
**dadurch gekennzeichnet, dass**
ein Verhältnis eines Widerstands der mindestens einen Zelle (2) zu einem Volumen V der mindestens einen Zelle (2) kleiner als 0,4 Milliohm/cm³ ist, bevorzugt kleiner als 0,3 Milliohm/cm³, am meisten bevorzugt kleiner als 0,2 Milliohm/cm³.

4. Energieversorgungsvorrichtung (1) nach einem der vorhergehenden Ansprüche
**dadurch gekennzeichnet, dass**
die mindestens eine Zelle (2) einen Innenwiderstand DCR_I von kleiner als 10 Milliohm aufweist, bevorzugt kleiner als 8 Milliohm und am meisten bevorzugt kleiner 6 Milliohm.

5. Energieversorgungsvorrichtung (1) nach einem der vorhergehenden Ansprüche
**dadurch gekennzeichnet, dass**
die mindestens eine Zelle (2) einen Erwärmungskoeffizienten von kleiner als 1,0 W/(Ah·A) aufweist, bevorzugt von kleiner als 0,75 W/(Ah·A) und besonders bevorzugt kleiner als 0,50 W/(Ah.A).

6. Energieversorgungsvorrichtung (1) nach einem der vorhergehenden Ansprüche **dadurch gekennzeichnet, dass**
die mindestens eine Zelle (2) dazu ausgebildet ist, im Wesentlichen konstant einen Strom von größer als 1.000 Ampère/Liter abzugeben.

7. Energieversorgungsvorrichtung (1) nach einem der vorhergehenden Ansprüche **dadurch gekennzeichnet, dass**
die mindestens eine Zelle (2) eine maximale Konstant-Strom-Abgabe von größer als 20 Ampère, bevorzugt größer als 30 Ampère, am meisten bevorzugt größer 40 Ampère aufweist.

8. Energieversorgungsvorrichtung (1) nach einem der vorhergehenden Ansprüche **dadurch gekennzeichnet, dass**
die Energieversorgungsvorrichtung (1) eine Entlade-C-Rate von größer als 80·t^(-0,45) aufweist.

9. Energieversorgungsvorrichtung (1) nach einem der vorhergehenden Ansprüche **dadurch gekennzeichnet, dass**
die mindestens eine Zelle (2) einen Zelltemperaturgradienten von kleiner 10 Kelvin aufweist.

10. Energieversorgungsvorrichtung (1) nach einem der vorhergehenden Ansprüche **dadurch gekennzeichnet, dass**
die mindestens eine Zelle (2) einen Zellkern aufweist, wobei kein Punkt innerhalb des Zellkerns mehr als 5 mm von einer Oberfläche A der Energieversorgungsvorrichtung (1) entfernt ist.

11. Energieversorgungsvorrichtung (1) nach einem der vorhergehenden Ansprüche **dadurch gekennzeichnet, dass**
die mindestens eine Zelle (2) mindestens ein Element (4) zur Vergrößerung der Oberfläche A der Zelle (2) aufweist.

12. Werkzeugmaschine (3) mit einer Energieversorgungsvorrichtung (1) nach einer der vorhergehenden Ansprüche
